# EUROPEAN PATENT SPECIFICATION

(11) **EP 1 650 166 B1**
(45) Date of publication and mention of the grant of the patent: **14.12.2016**
(21) Application number: 04730096.7
(22) Date of filing: 28.04.2004
(51) Int. Cl.: C02F 1/04, C02F 103/08

(54) **PLATE TYPE FRESH WATER GENERATOR**
FRISCHWASSERGENERATOR VOM PLATTENTYP
GENERATEUR D'EAU DOUCE A PLAQUES

(30) Priority: 17.06.2003 JP 2003171699
(43) Date of publication of application: 26.04.2006
(73) Proprietor: SASAKURA ENGINEERING CO. LTD., Osaka 555-0012 (JP)
(72) Inventor: Sawada, Iwao, c/o Sasakura Engineering Co., Ltd., Osaka-shi, Osaka 555-0012 (JP)
(74) Representative: Grosse Schumacher Knauer von Hirschhausen
(86) International application number: PCT/JP2004/006218
(87) International publication number: WO 2004/113234

(56) References cited:
- JP-A- 5 016 887
- JP-A- 5 016 887
- JP-A- 6 254 534
- JP-A- 6 254 534
- JP-A- 9 299 927
- JP-A- 9 299 927
- US-B1- 6 254 734
- DATABASE EPODOC [Online] EUROPEAN PATENT OFFICE, THE HAGUE, NL; XP002606806 Database accession no. CN-01278782-U & CN 2 527 550 Y (UNIV TIANJIN [CN]) 25 December 2002 (2002-12-25)

## Description

### TECHNICAL FIELD

The present invention relates to a fresh water generator that produces fresh water by boiling and evaporating material liquid such as seawater and then condensing the vapor into fresh water. In particular, it relates to a plate type water generator utilizing a plate type heat exchanger for evaporating the material liquid and condensing the vapor, where the heat exchanger is composed of a plurality of heat transfer plates stacked so as to form fluid paths therebetween.

### BACKGROUND ART

JP-A-H09-299927, as prior art, discloses a water generator of the above-mentioned plate type.

Specifically, the plate type water generator comprises a support panel having obverse and reverse surfaces. One of these surfaces is provided with a plate type heat exchanger for heating purposes and another plate type heat exchanger for condensing purposes, where each of the heat exchangers is composed of a plurality of plates stacked so as to form fluid paths therebetween. The other surface of the support panel is provided with a cylindrical gas-liquid separation tank. In the heating heat exchanger, the material liquid is heated to boil and evaporate by the heat supplied from the coolant circulating in a diesel engine, for example. Both the boiled material liquid and the vapor are conducted into the gas-liquid separation tank to be separated. Then, the evaporated moisture or vapor is conducted into the condensing heat exchanger, and condensed into fresh water upon exchanging heat with a coolant.

In the conventional plate type water generator, however, the boiled water (i.e., the thickened material liquid) and the vapor, which result from the heating in the heating heat exchanger, are conducted, via a pipe having a circular cross-section, into the gas-liquid separation tank, which is located opposite to the heating exchanger with respect to the support panel. Then, the vapor separated in the gas-liquid separation tank is introduced, again via a pipe having a circular cross-section, into the condensing heat exchanger located opposite to the gas-liquid separation tank with respect to the support panel.

Thus, a significant pressure loss is incurred when the vapor produced in the heating exchanger is introduced into the gas-liquid separation tank via circular piping and then into the condensing exchanger via circular piping. Accordingly, the evaporation of the material liquid, and hence the production of fresh water is reduced in proportion to the pressure loss.

Further, since the gas-liquid Separation tank is cylindrical, the tank bulges from the support panel, whereby the water generator as a whole is unduly big and heavy.

Still further, in the heating heat exchanger of the conventional plate type water generator, a Single outlet port of the boiled water (accurately, the thickened material liquid and the vapor) from the heating heat exchanger is provided at an upper corner, and a Single inlet port of the material liquid is provided at a lower corner. Due to this configuration, in material liquid paths formed between the heat exchanging plates, the flow of the supplied material liquid is nonuniform, whereby the material liquid tends to be stagnant at the other lower corner and the other upper corner. As a result, the effective utilization of the entire surface s of the heat exchange plates is impeded, thereby resulting in lower production efficiency and even in local emergence of scales.

It is a technical object of the present invention to provide a plate type water generator free from the foregoing problems.

### DISCLOSURE OF THE INVENTION

An aspect of the present invention provides a plate type water generator including a support panel with a first and a second side, the second side being opposite to the first side with regard to the support panel, and a heating plate type heat exchanger that exchanges heat with a heating fluid to boil and evaporate a material liquid, and a condensing plate type heat exchanger that exchanges heat with a cooling fluid to condense vapor, both attached to a first side of a support panel, and a gas-liquid Separation tank that separates the vapor from the material liquid attached to the other side of the support panel. The support panel includes a boiled water outlet port communicating with a boiled water discharge path extending from material liquid paths in the heating plate type heat exchanger provided on the first side and a vapor inlet port communicating with a vapor intake path leading to vapor paths in the condensing heat exchanger provided on the first side, both having an opening on the other side of the support panel. The gasliquid Separation tank is attached to the other second side of the support panel so that the respective openings of the boiled water outlet port of the heating plate type heat exchanger and the vapor inlet port of the condensing heat exchanger are directly exposed inside the gas-liquid Separation tank, which is provided with an open side toward the support panel. The open side is closed with the support panel by flange connection.

Such configuration allows directly introducing the vapor produced in the heating plate type heat exchanger, i.e. the vapor and the Condensed material liquid, into the gas-liquid Separation tank without the intermediation of the piping as the prior art. Also, the conf iguration allows directly introducing the vapor separated in the gas-liquid Separation tank in to condensing plate type heat exchanger without the intermediation of the piping as the prior art, thereby significantly reducing the pressure loss of the vapor flow from the heating plate type heat exchanger through the gas-liquid Separation tank to the condensing heat exchanger. Therefore, the evaporation amount of the material liquid, hence the production amount of fresh water can be increased in proportion to the reduction of the pressure loss.

Also, since the gas-liquid Separation tank is directly attached to the support panel without the intermediation of the piping, the overall dimensions and weight of the water generator can be substantially reduced.

The boiled water discharge path and the boiled water outlet port are communicating therewith of the heating plate type heat exchanger, and the vapor intake path and the vapor inlet port communicating therewith of the condensing heat exchanger are of a Channel shape extending in parallel orsubstantially parallel to each other.

Firstly, such configuration significantly shortens a distance from the boiled water outlet port of the heating plate type heat exchanger to the vapor inlet port of the condensing heat exchanger in the gas-liquid Separation tank, in comparison with the circular piping as the prior art. Secondly, the flow of the vapor inside the gas-liquid Separation tank from the boiled water outlet port to the vapor inlet port becomes smoother than in the circular piping as the prior art, and also the fluid can flow more smoothly through the material liquid paths in the heating plate type heat exchanger and the vapor paths in the condensing heat exchanger. Thirdly, the cross-sectional area of the boiled water discharge path and the boiled water outlet port communicating therewith of the heating plate type heat exchanger and the vapor intake path and the vapor inlet port communicating therewith of the condensing heat exchanger can be significantly increased, in comparison with the circular piping as the prior art.

Accordingly, the pressure loss of the vapor flow can be further reduced through the collaboration of these three effects, and therefore the evaporation amount of the material liquid, hence the production amount of fresh water can be further increased.

A further aspect of the present invention provides the plate type water generator , wherein the boiled water discharge path and the boiled water outlet port communicating therewith in the heating plate type heat exchanger are located at a generally central position of an upper end portion as viewed in the plate stacking direction of the heating plate type heat exchanger, and at least two material intake paths to the material liquid paths in the heating plate type heat exchanger are located at left and right corners of a lower end portion, as viewed in the plate stacking direction of the heating plate type heat exchanger.

Such configuration allows, when the heating plate type heat exchanger is of a small size, the material liquid to ascend by evaporation f rom the lower end toward the generally central portion of the upper end. This can present the flow of the material liquid from being stagnant at the lower left and right corners and the upper left and right corners, thereby facilitating more effective utilization of the entire faces of the heat exchange plates, thus improving the production efficiency and suppressing the local emergence of scales.

A further aspect of the present invention provides the plate type water generator , wherein the boiled water discharge path of the heating plate type heat exchanger is of a Channel shape wider than its depth and located at a generally central Position of the upper end portion viewed in the plate stacking direction of the heating plate type heat exchanger, and the material intake path to the material liquid paths of the heating plate type heat exchanger is located in a lower end portion, viewed in the plate stacking direction of the heating plate type heat exchanger.

Such configuration allows, when the heating plate type heat exchanger is of a small size, the vapor to flow from the material liquid paths to the boiled water discharge path via the respective positions aligned in a transverse direction, thereby ensuring the prevention of the stagnant flow at the lower left and right corners and the upper left and right corners.

A further aspect of the present invention provides the plate type water generator, wherein the heat exchange plate in the heating plate type heat exchanger and the heat exchange plate in the condensing heat exchanger are integrally formed in a unified heat exchange plate.

Such configuration allows further reduction in dimensions and weight, and simplifying the pressing process of the heat exchange plates, because of the unified structure of the heat exchange plates in the heating plate type heat exchanger and the heat exchange plates in the condensing heat exchanger. This results in reduction of the manufacturing cost.

### BRIEF DESCRIPTION OF THE DRAWINGS

Fig. 1 is a front view showing a first embodiment;
Fig. 2 is a cross-sectional view taken along the line II-II of Fig. 1;
Fig. 3 is a cross-sectional view taken along the line III-III of Fig. 1;
Fig. 4 is a cross-sectional view taken along the line IV-IV of Fig. 1; and
Fig. 5 is a vertically cross-sectional front view of a second embodiment.

### BEST MODE FOR CARRYING OUT THE INVENTION

Embodiments of the present invention will now be described below with reference to the drawings.

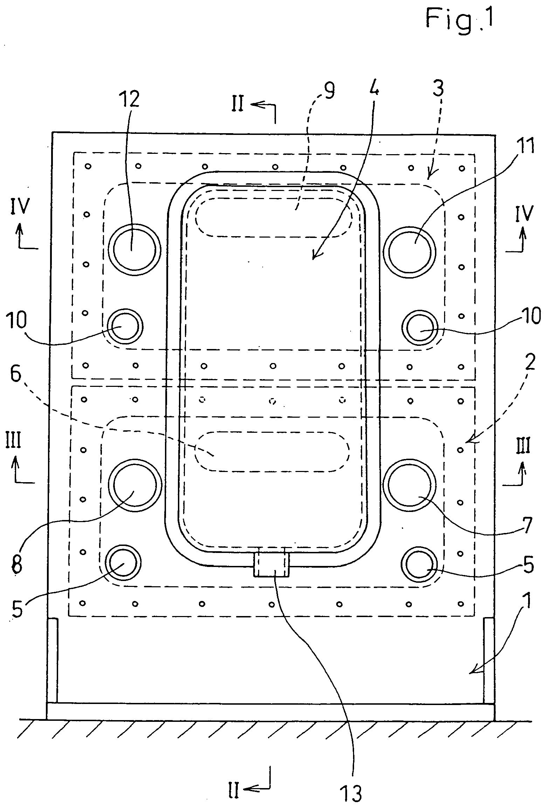

Figs. 1 to 4 illustrate a first embodiment. In these drawings, the reference numeral 1 designates a support panel erected in the form of a stand on the ground or the like. A first side 1a of the support panel 1 is provided with a lower heat exchanger 2 of a plate type for heating purposes and also with an upper heat exchanger 3 of a plate type for condensing purposes. A second side 1b of the support panel 1 is provided with a gas-liquid separation tank 4 attached thereto.

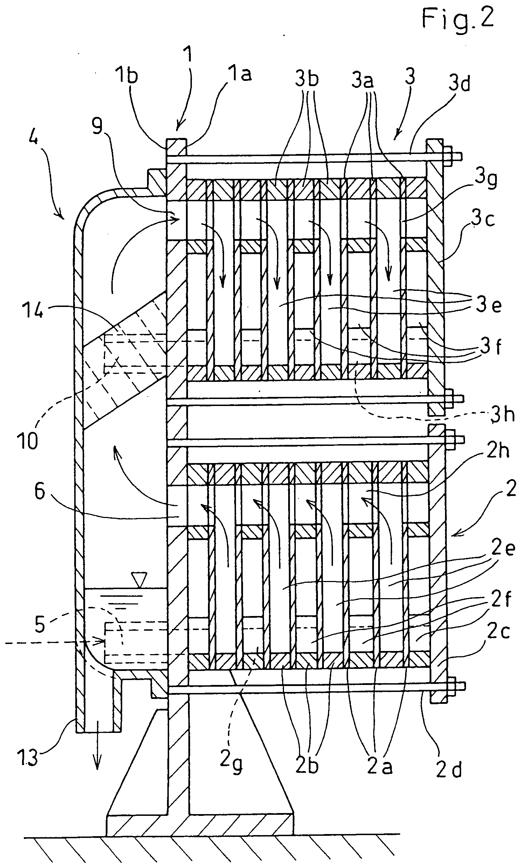

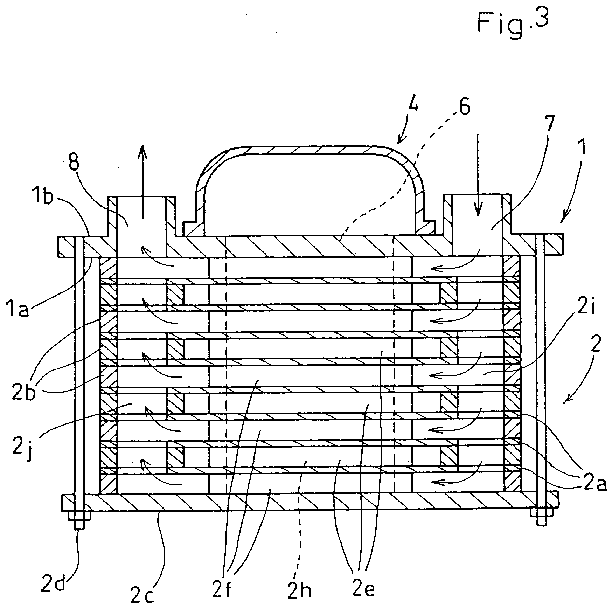

As shown in Figs. 2 and 3, the heating heat exchanger 2 comprises an assembly that includes, in a known manner, a plurality of heat exchange plates 2a made of a horizontally elongated, rectangular thin metal plate, and a plurality of seal materials 2b stacked alternately with the metal plates. This assembly is fixed to the support panel 1 by attaching a face plate 2c, disposed on one side of the assembly, to the support panel with a plurality of bolts 2d. Between the heat exchange plates 2a are formed a plurality of material liquid paths 2e and a plurality of heating fluid paths 2f.

Inside the heating heat exchanger 2, at least two intake paths 2g for the material liquid, each communicating with the material liquid paths 2e, are located at lower left and right corners as viewed in the plate stacking direction. Further, a boiled water discharge path 2h communicating with the material liquid paths 2e is located in an upper portion of the heat exchanger at a central position thereof as viewed in the plate stacking direction. The respective paths extend longitudinally in the plate stacking direction.

Further, in the heating heat exchanger 2, at least one heating fluid intake path 2i communicating with the heating fluid path 2f is provided at one side portion as viewed in the plate stacking direction, and at least one heating fluid discharge path 2j is provided at the other side portion as viewed in the plate stacking direction. These paths extend longitudinally in the plate stacking direction.

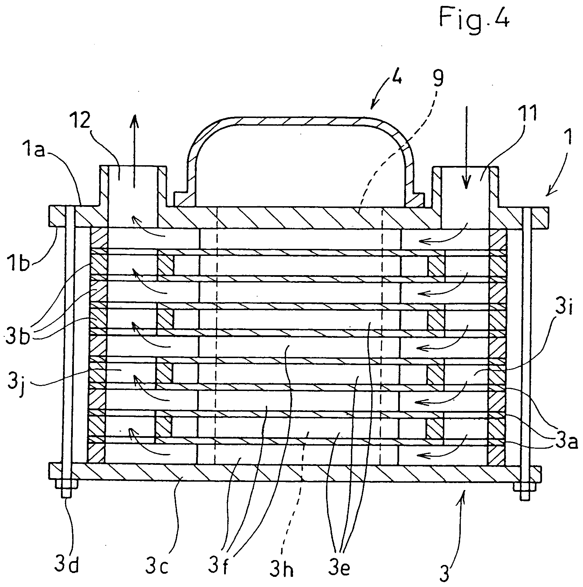

As shown in Figs. 2 and 4, the condensing heat exchanger 3 comprises an assembly that includes, in a known manner, a plurality of heat exchange plates 3a made of a horizontally elongated, rectangular thin metal plates, and a plurality of seal materials 3b stacked alternately with the metal plates. This assembly is fixed to the support panel 1 by attaching a face plate 3c, disposed on one side of the assembly, to the support panel with a plurality of bolts 3d. Between the heat exchange plates 3a are formed a plurality of vapor paths 3e and a plurality of cooling fluid paths 3f.

In the condensing heat exchanger 3, a vapor intake path 3g communicating with the vapor paths 3e is located in an upper portion at a central position as viewed in the plate stacking direction, and at least two condensed water discharge paths 3h communicating with the vapor paths 3e are provided at lower left and right corners as viewed in the plate stacking direction. These paths extend longitudinally in the plate stacking direction.

Further, inside the condensing heat exchanger 3, at least one cooling fluid intake path 3i communicating with the cooling fluid path 3f is located in one side portion as viewed in the plate stacking direction, and at least one cooling fluid discharge path 3j is located in the other side portion as viewed in the plate stacking direction. These paths extend longitudinally in the plate stacking direction.

The support panel 1 is formed with material liquid inlet ports 5 communicating with the material intake paths 2g of the heating heat exchanger 2, a boiled water outlet port 6 communicating with the boiled water discharge path 2h, a heating fluid inlet port 7 communicating with the heating fluid intake path 2i, and a heating fluid outlet port 8 communicating with the heating fluid discharge path 2j. All the ports 5 to 8 are open at the second side 1b of the support panel 1.

The support panel 1 also includes a vapor inlet port 9 communicating with the vapor intake paths 3g of the condensing heat exchanger 3, condensed water outlet ports 10 communicating with the condensed water discharge path 3h, a cooling fluid inlet port 11 communicating with the cooling fluid intake path 3i, and a cooling fluid outlet port 12 communicating with the cooling fluid discharge path 3j. All the ports 9 to 12 are open at the second side 1b of the support panel 1.

The boiled water discharge path 2h and the boiled water outlet port 6 of the heating heat exchanger 2, and the vapor intake path 3g and the vapor inlet port 9 of the condensing heat exchanger 3 constitute channels having a horizontally elongated cross-section, where the channel of the boiled water discharge path 2h and the boiled water outlet port 6 extends in parallel or substantially parallel to the channel of the vapor intake path 3g and the vapor inlet port 9.

The gas-liquid separation tank 4 is attached to the second side 1b of the support panel 1. The gas-liquid separation tank 4 is entirely open at one side, and this open side is closely fixed to the second side 1b of the support panel 1 by flange connection, so that the openings of both the boiled water outlet port 6 and the vapor inlet port 9 are exposed directly to the inside the gas-liquid separation tank 4.

The gas-liquid separation tank 4 is provided, at a bottom thereof, with an outlet 13 for the thickened material liquid. Inside the gas-liquid separation tank 4, a demister 14 for collecting water droplets in the vapor is provided between the boiled water outlet port 6 and the vapor inlet port 9.

With the above structure, the material liquid flows through the material liquid inlet port 5 and the material intake path 2g into the material liquid paths 2e in the heating heat exchanger 2, where the material liquid is heated by the heat exchange with the heating fluid flowing through the adjacent heating fluid paths 2f, whereby the material liquid is boiled and evaporated.

The boiled water produced by the heating, that is, the vapor and the thickened material liquid are introduced through the boiled water discharge path 2h and the boiled water outlet port 6 into the gas-liquid separation tank 4, where the vapor and the thickened material liquid are separated. After the separation, the thickened material liquid is discharged through the outlet 13, while the vapor flows through the vapor inlet port 9 and the vapor intake path 3g into the vapor paths 3e, where it is cooled by the heat exchange with the cooling fluid flowing through the adjacent cooling fluid paths 3f, and thus turned into fresh water. This water is taken out of the water generator through the condensed water outlet port 10.

In the above configuration, the openings of the boiled water outlet port 6 of the heating heat exchanger 2 and the vapor inlet port 9 of the condensing heat exchanger 3 are directly exposed to the inside the gas-liquid separation tank 4. Thus, the pressure loss of the vapor flowing from the heating heat exchanger 2 via the gas-liquid separation tank 4 to the condensing heat exchanger 3 is significantly reduced.

Also, the pressure loss of the vapor flow can be further reduced by the configuration that the horizontally elongated channel of the boiled water discharge path 2h and the boiled water outlet port 6 in the heating plate heat exchanger 2 extends in parallel or substantially parallel to the horizontally elongated channel of the vapor intake path 3g and the vapor inlet port 9 in the condensing heat exchanger 3. With this arrangement, the distance between the channels is shortened, and the vapor can flow smoothly.

Also, in the heating heat exchanger 2, the boiled water discharge path 2h and the boiled water outlet port 6 are located at a generally central position of the upper end portion as viewed in the plate stacking direction of the heating heat exchanger 2, and the two material intake path 2g and the material liquid inlet port 5 of the heating heat exchanger 2 are disposes at the left and right corners of the lower end portion as viewed in the plate stacking direction of the heating heat exchanger 2. In this arrangement, the material liquid is caused to flow upward from the lower left and right corners toward the upper and generally central portion as it is boiled and evaporated. Advantageously, this prevents the material liquid from stagnating at the lower left and right corners and also the upper left and right corners.

It should be noted, according to the present invention, three or more material intake paths 2g and material liquid intake ports 5 may be provided. In this instance, at least two of these may be located at the lower left and right corners, respectively.

Advantageously, the heating heat exchanger 2 may be of a relatively small size with respect to the horizontally elongated channel of the boiled water discharge path 2h of the heating heat exchanger 2, which is located at a generally central position in the upper end portion as viewed in the plate stacking direction of the heating heat exchanger 2, whereas the material intake paths 2g leading to the material liquid paths 2e may be provided at the lower end portions, as viewed in the plate stacking direction of the heating heat exchanger 2. In this arrangement, it is possible to allow the boiled water to flow from the material liquid paths 2e to the boiled water discharge path 2h at any positions in the transverse direction, thereby ensuring the prevention of a stagnant flow at the lower left and right corners and the upper left and right corners.

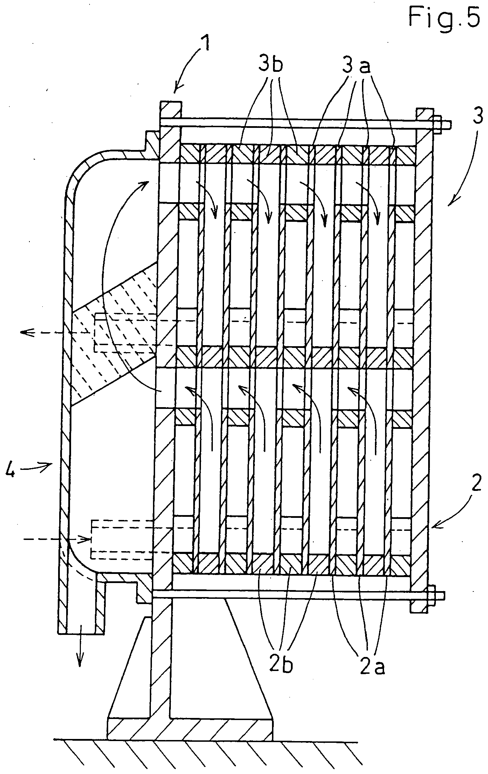

Fig. 5 illustrates a second embodiment.

The second embodiment represents a case where, in the structure according to the first embodiment, the respective heat exchange plates 2a of the heating heat exchanger 2 and the respective heat exchange plates 3a of the condensing heat exchanger 3 are formed integral as unified heat exchange plates. The remaining portion of the structure is the same as the first embodiment.

According to the second embodiment, the heating heat exchanger 2 and the condensing heat exchanger 3 can be assembled into a unified structure, which results in further reduction in dimensions and weight of the water generator.

## Claims

1. A plate type water generator including a support panel (1) having a first side (1 a) provided with a heating plate type heat exchanger (2) to boil and evaporate a material liquid by heat exchange with a heating fluid and provided with a condensing plate type heat exchanger (3) for condensing vapor by heat exchange with a cooling fluid, the support panel (1) having a second side (1 b) provided with a gas-liquid separation tank (4) for separating the material liquid and vapor, the first side (1 a) being opposite to the second side (1b) with regard to the support panel (1),
wherein the support panel (1) is formed with a boiled water outlet port (6) communicating with a boiled water discharge path (2h) from material liquid paths (2e) in the heating plate type heat exchanger (2) provided on the first side (1 a) and also formed with a vapor inlet port (9) communicating with a vapor intake path (3g) leading to vapor paths in the condensing plate type heat exchanger (3) provided on the first side (1 a), these ports being open at the second side (1 b) of the support panel (1),
wherein the gas-liquid separation tank (4) is provided with an entirely open side toward the support panel (1),
wherein the open side of the gas liquid separation tank (4) is closely attached to the second side (1 b) of the support panel (1) by a flange connection in a manner such that the boiled water outlet port (6) of the heating plate type heat exchanger (2) and the vapor inlet port (9) of the condensing plate type heat exchanger (3) are exposed directly to an inside of the gas-liquid separation tank (4) and the open side is closed with the support panel (1) by flange connection,
wherein the boiled water discharge path (2h) and the boiled water outlet port (6) communicating with the discharge path in the heating plate type heat exchanger (2) are formed into a channel of an elongated section, while the vapor intake path (3g) and the vapor inlet port (9) communicating with the intake path in the condensing plate type heat exchanger (3) are formed into another channel of an elongated section, these channels being arranged to extend in parallel to each other.

2. The plate type water generator according to claim 1, further comprising a demister (14) for collecting droplets in vapour, the demister being provided between the boiled water outlet port (6) and the vapour inlet port (9), wherein the gas-liquid separation tank (4) is provided with an outlet (13) for the thickened material.

3. The plate type water generator according to claim 1 or 2, wherein the boiled water discharge path (2h) and the boiled water outlet port (6) communicating with the discharge path in the heating plate type heat exchanger (2) are located at a central position of an upper portion as viewed in the plate stacking direction of the heating plate type heat exchanger (2), and wherein at least two material intake paths (2g) to the material liquid paths (2e) in the heating plate type heat exchanger (2) are provided at left and right corners of a lower portion as viewed in the plate stacking direction of the heating plate type heat exchanger (2).

4. The plate type water generator according to claim 1 or 2, wherein the boiled water discharge path (2h) of the heating plate type heat exchanger (2) is formed into a channel of a horizontally elongated section, and located at a generally central position of the upper portion as viewed in the plate stacking direction of the heating plate type heat exchanger (2), and wherein the material intake path to each of the material liquid paths (2e) in the heating plate type heat exchanger (2) is located in a lower portion as viewed in the plate stacking direction of the heating plate type heat exchanger (2).

5. The plate type water generator according to any one of claims 1 to 4, wherein the heat exchange plates (2a) in the heating plate type heat exchanger (2) and the heat exchange plates (3a) in the condensing heat exchanger (3) are integrally formed as a unified heat exchange plate.

## Patentansprüche

1. Platten-Wassergenerator, der eine Stützplatte (1) enthält, welche eine erste Seite (1a) hat, die mit einem Heizplatten-Wärmetauscher (2) versehen ist, um eine Materialflüssigkeit durch Wärmeaustausch mit einem Heizfluid zu sieden und zu verdampfen, und der mit einem Verflüssigungs-Plattenwärmetauscher (3) zum Verflüssigen von Dampf durch Wärmeaustausch mit einem Kühlfluid versehen ist, wobei die Stützplatte (1) eine zweite Seite (1b) hat, die mit einem Gas-Flüssigkeits-Abscheidetank (4) zum Abscheiden der Materialflüssigkeit und Dampf versehen ist, wobei die erste Seite (1a) gegenüber der zweiten Seite (1b) in Bezug auf die Stützplatte (1) liegt,
wobei die Stützplatte (1) mit einem Siedewasser-Auslassport (6) gebildet ist, der in Kommunikation mit einem Siedewasser-Entleerungsweg (2h) von den Materialflüssigkeitswegen (2e) im Heizplatten-Wärmetauscher (2) steht, der auf der ersten Seite (1a) vorgesehen ist und auch mit einem Dampfeinlassport (9) gebildet ist, der mit einem Dampfeinlassweg (3g) kommuniziert, der zu den Dampfwegen im Verflüssigungs-Plattenwarmetauscher (3) führt, welcher auf der ersten Seite (1a) vorgesehen ist, wobei diese Ports an der zweiten Seite (1b) der Stützplatte (1) offen sind,
wobei der Gas-Flüssigkeits-Abscheidungstank (4) mit einer vollständig offenen Seite zur Stützplatte (1) hin versehen ist,
wobei die offene Seite des Gas-Flüssigkeits-Abscheidungstanks (4) dicht an der zweiten Seite (1b) der Stützplatte (1) durch eine Flanschverbindung derart befestigt ist, dass der Siedewasser-Auslassport (6) des Heizplatten-Wärmetauschers (2) und der Dampfeinlassport (9) des Verflüssigungs-Plattenwärmetauschers (3) direkt an einer Innenseite des Gas-Flüssigkeit-Abscheidungstanks (4) frei liegen und die offene Seite mit der Stützplatte (1) durch Flanschverbindung geschlossen ist,
wobei der Siedewasser-Entleerungsweg (2h) und der Siedewasser-Auslassport (6), die in Verbindung mit dem Entleerungsweg im Heizplatten-Wärmetauscher (2) zu einem Kanal eines gestreckten Abschnitts geformt sind, während der Dampfeinlassweg (3g) und der Dampfeinlassport (9), die mit dem Einlassweg im Verflüssigung-Wärmetauscher (3) zu einem weiteren Kanal eines gestreckten Abschnitts geformt sind, wobei diese Kanäle so angeordnet sind, dass sie sich parallel zueinander erstrecken.

2. Platten-Wassergenerator nach Anspruch 1, der ferner einen Entnebler (14) zum Sammeln von Tropfen im Dampf umfasst, wobei der Entnebler zwischen dem Siedewasser-Auslassport (6) und dem Dampfeinlassport (9) vorgesehen ist, wobei der Gas-Flüssigkeit-Abscheidungstank (4) mit einem Auslass (13) für das verdickte Material vorgesehen ist.

3. Platten-Wassergenerator nach Anspruch 1 oder 2, wobei der Siedewasser-Entleerungsweg (2h) und der Siedewasser-Auslassport (6), die mit dem Entleerungsweg im Platten-Wärmetauscher (2) kommunizieren, sich an einer zentralen Position eines oberen Teils befinden, bei Betrachtung in der Plattenstapelrichtung des Heizplatten-Wärmetauschers (2), und wobei mindestens zwei Materialeinlasswege (2g) zu den Materialflüssigkeitswegen (2e) im Heizplatten-Wärmetauscher (2) an den linken und rechten Ecken eines unteren Teils vorgesehen sind, bei Betrachtung in der Plattenstapelrichtung des PlattenWärmetauschers (2).

4. Platten-Wassergenerator nach Anspruch 1 oder 2, wobei der Siedewasser-Entleerungsweg (2h) des Heizplatten-Wärmetauschers (2) zu einem Kanal mit einem horizontal gestreckten Anschnitt geformt ist und sich an einer im allgemeinen zentralen Position des oberen Teils befindet, wenn in der Plattenstapelrichtung des Heizplatten-Wärmetauschers (2) betrachtet, und wobei der Materialaufnahmeweg zu jedem der Materialflüssigkeitswege (2e) im Heizplatten-Wärmetauscher (2) sich in einem unteren Teil befindet, wenn in der Plattenstapelrichtung des Heizplatten-Wärmetauschers (2) betrachtet.

5. Platten-Wassergenerator nach einem der Ansprüche 1 bis 4, wobei die Wärmetauschplatten (2a) im Heizplatten-Wärmetauscher (2) und die Wärmeaustauschplatten (3a) im Verflüssigungs-Wärmetauscher (3) integral als eine vereinigte Wärmetauscherplatte gebildet sind.

## Revendications

1. Générateur d'eau de type à plaques présentant un panneau de support (1) présentant un premier côté (1a) doté d'un échangeur de chaleur de type à plaques chauffantes (2) pour faire bouillir et évaporer un liquide de matière par échange thermique avec un fluide de chauffage et doté d'un échangeur de chaleur de type à plaques à condensation (3) pour condenser de la vapeur par échange thermique avec un fluide de refroidissement, le panneau de support (1) présentant un second côté (1b) doté d'un réservoir de séparation gaz-liquide (4) pour séparer le liquide de matière et la vapeur, le premier côté (1a) étant opposé au second côté (1b) par rapport au panneau de support (1),
dans lequel le panneau de support (1) est formé d'un port de sortie d'eau bouillie (6) communiquant avec un trajet de décharge d'eau bouillie (2h) à partir des trajets de liquide de matériel (2e) dans l'échangeur de chaleur de type à plaques chauffantes (2) prévu sur le premier côté (1a) et également formé d'un port d'entrée de vapeur (9) communiquant avec un trajet de prise de vapeur (3g) menant aux trajets de vapeur dans l'échangeur de chaleur de type à plaques à condensation (3) prévu sur le premier côté (1a), ces ports étant ouverts sur le second côté (1b) du panneau de support (1),
dans lequel le réservoir de séparation gaz-liquide (4) est doté d'un côté entièrement ouvert en direction du panneau de support (1),
dans lequel le côté ouvert du réservoir de séparation gaz-liquide (4) est fixé étroitement au second côté (1b) du panneau de support (1) par une liaison bridée de façon ce que le port de sortie d'eau bouillie (6) de l'échangeur de chaleur de type à plaques chauffantes (2) et le port d'entrée de vapeur (9) de l'échangeur de chaleur de type à plaques à condensation (3) soient exposés directement vers un intérieur du réservoir de séparation gaz-liquide (4) et que le côté ouvert soit fermé avec le panneau de support (1) par une connexion bridée,
dans lequel le trajet de décharge d'eau bouillie (2h) et le port de sortie d'eau bouillie (6) communiquant avec le trajet de décharge dans l'échangeur de chaleur de type à plaques chauffantes (2) sont formés en un canal d'une section allongée, tandis que le trajet de prise de vapeur (3g) et le port d'entrée de vapeur (9) communiquant avec le trajet de prise dans l'échangeur de chaleur à condensation (3) sont formés en un autre canal d'une section allongée, ces canaux étant agencés pour s'étendre parallèlement l'un à l'autre.

2. Générateur d'eau de type à plaques selon la revendication 1, comprenant en outre un dispositif anti-buée (14) pour collecter les gouttes de vapeur, le dispositif anti-buée étant prévu entre le port de sortie d'eau bouillie (6) et le port d'entrée de vapeur (9), dans lequel le réservoir de séparation gaz-liquide (4) est doté d'une sortie (13) pour le matière épaissi.

3. Générateur d'eau de type à plaques selon la revendication 1 ou 2, dans lequel le trajet de décharge d'eau bouillie (2h) et le port de sortie d'eau bouillie (6) communiquant avec le trajet de décharge dans l'échangeur de chaleur de type à plaques chauffantes (2) sont situés à une position centrale d'une partie supérieure, vu dans le sens d'empilement des plaques de l'échangeur de chaleur de type à plaques chauffantes (2), et dans lequel au moins deux trajets de prise de matière (2g) vers les trajets de liquide de matière (2e) dans l'échangeur de chaleur de type à plaques chauffantes (2) sont dotés aux angles gauche et droit d'une partie inférieure, vu dans le sens d'empilement de plaques de l'échangeur de chaleur de type à plaques chauffantes (2)

4. Générateur d'eau de type à plaques selon la revendication 1 ou 2, dans lequel le trajet de décharge d'eau bouillie (2h) de l'échangeur de chaleur de type à plaques chauffantes (2) est formé en un canal de section allongée horizontalement, et situé en une position généralement centrale de la partie supérieure, vu dans le sens d'empilement des plaques de l'échangeur de chaleur de type à plaques chauffantes (2), et dans lequel le trajet de prise de matière vers chacun des trajets de liquide de matière (2e) dans l'échangeur de chaleur de type à plaques chauffantes (2) est situé dans une partie inférieure, vu dans le sens d'empilement des plaques de l'échangeur de chaleur de type à plaques chauffantes (2).

5. Générateur d'eau de type à plaques selon l'une quelconque des revendications 1 à 4, dans lequel les plaques d'échange thermique (2a) dans l'échangeur de chaleur de type à plaques chauffantes (2) et les plaques d'échange thermique (3a) dans l'échangeur de chaleur à condensation (3) sont formées intégralement en tant que plaque d'échange thermique unifiée.
